# EUROPEAN PATENT APPLICATION

(11) **EP 1 653 102 A1**
(43) Date of publication of application: **03.05.2006**
(21) Application number: 04771067.8
(22) Date of filing: 30.07.2004
(51) Int. Cl.: F16D 3/41

(54) **UNIVERSAL JOINT**

(30) Priority: 31.07.2003 JP 2003204571; 31.07.2003 JP 2003204572
(71) Applicant: Koyo Seiko Co., Ltd., Osaka-shi, Osaka 542-0081 (JP)
(72) Inventor: ARAKI, Satoshi, 5420072 (JP)
(74) Representative: Pohlmann, Eckart
(86) International application number: PCT/JP2004/010907
(87) International publication number: WO 2005/012747

(57) **Abstract**

In a universal joint in which each of shaft portions 1a of a cross shaft 1 is rotatably supported by: a shell cup 2 which is fitted into a fitting hole 10x disposed in a fork end portion 10a of a yoke; and a plurality of needle rollers 3 arranged on an inner circumference 2y of the bearing cup 2, an annular sealing member 4 for hermetically sealing the opening of the cup 2 is fitted and fixed to a shaft portion outer circumferential face 1x of the cross shaft 1 via a metal annular member 5. According to the configuration, it is possible to prevent the sealing member 4 from dropping out due to the increase in the internal pressure in attaching the shell cup 2 or the knocking-up by the rollers 3 in operation.

A circumferential groove 10y is formed in an inner circumferential face of the fitting hole 10x of the yoke, and a retaining ring 7 is disposed in the circumferential groove 10y. As compared with a conventional method in which the caulking is used for preventing the bearing cup from dropping out, therefore, the positioning of the shell cup 2 in the axial direction is easily performed. In addition, the retaining ring 7 can be easily attached and detached, so that the maintenance for the bearing portion of the universal joint, the exchange of components, and the like can be easily performed in a short period of time.

## Description

### Technical Field

The invention relates to a universal joint, and more particularly to a universal joint which has a large load capacity while it is small and light, and which is suitably used for a propeller shaft of an automobile or the like.

### Background Art

As universal joints used in automobiles or various industrial machines, cross-shaft universal joints employing a cross shaft are used. Particularly, a universal joint used in a propeller shaft of an automobile or the like is requested to improve a torque capacity (load capacity) because of recent improvement of the output of an engine.

In order to satisfy the request, Japanese Patent Publication (Kokai) No. 2001-146924 discloses means for increasing a torque capacity of a universal joint without increasing the outer diameter of a bearing cup for covering a shaft portion of a cross shaft, by employing a thin shell-like bearing cup (shell cup) formed by press-molding a steel plate as the bearing cup, instead of a conventional thick machined type bearing cup.

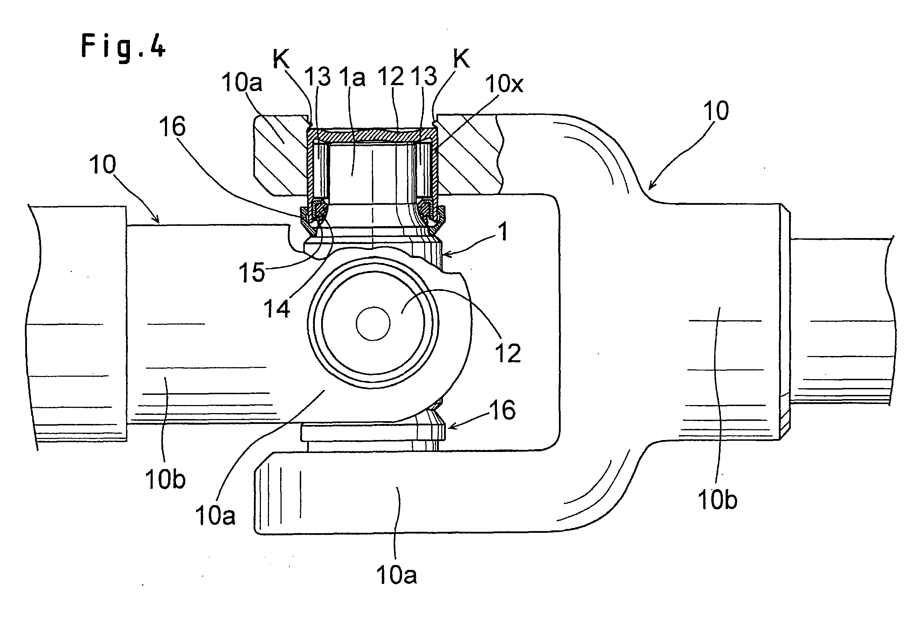

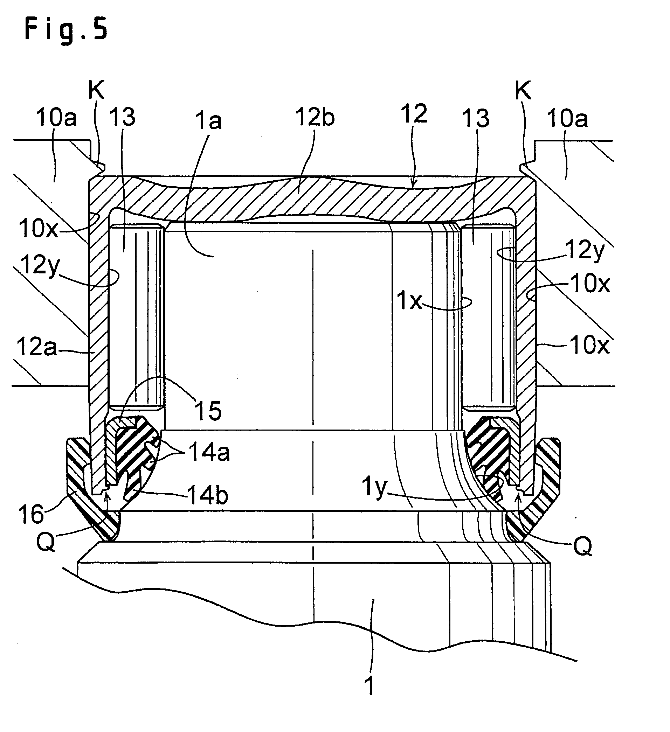

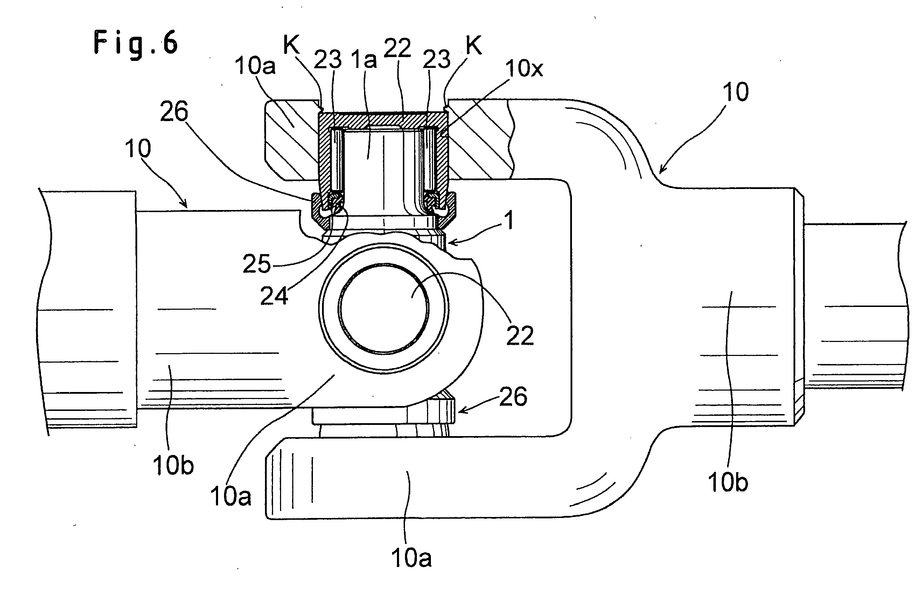

Fig. 4 is a partial section view showing the structure of a universal joint using such a shell-type bearing cup, and Fig. 5 is a section view of a bearing portion of the universal joint. As a reference, Fig. 6 shows a universal joint using a conventional machined-type bearing cup.

The universal joint has the structure in which a pair of yokes 10, 10 each having fork ends are mutually coupled by a cross shaft 1 having shaft portions 1a which protrude in four directions. Torque transmitting members (a propeller shaft, an output shaft for a transmission, and the like) are coupled respectively to outside end portions 10b of the respective yokes 10, by means of welding, a spline, a flange, or the like.

In fork end portions 10a, 10a of the yoke 10, fitting holes 10x for supporting the respective shaft portions 1a of the cross shaft 1 are formed, respectively. The cross shaft 1 and the yoke 10 are coupled together by interposing a radial bearing in which a plurality of needle rollers 13, 13, ... are arranged between the shaft portion 1a of the cross shaft 1 serving as an inner ring and the metal bearing cup (the shell cup 12) serving as an outer ring.

As shown in Fig. 5, the shell cup 12 is a bottomed cylinder configured by a cylindrical portion 12a and a bottom portion 12b, and formed by pressing a plate. The shell cup 12 is fixed to the fork end portion 10a of the yoke 10, by pressingly inserting an outer circumferential face 12x of the cylindrical portion 12a into the fitting hole 10x. In addition, the positioning in the axial direction and the prevention of dropping-out are realized by caulking an inner circumference of the fitting hole 10x (a caulked portion K).

In an annular space formed by an inner circumferential face 12y of the shell cup 12 and the outer circumferential face 1x of the shaft portion 1a, the plurality of needle rollers 13 are arranged. The annular space is filled with a lubricant (not shown) such as grease for maintaining the lubrication of the needle rollers 13. The opening of the shell cup 12 is hermetically sealed by an annular sealing member 14.

The sealing member 14 is generally constituted by an annular base member 14c made of a rubber or the like including lip portions (a radial lip 14a (a main lip) and a side lip 14b), and a core 15 for fixing the base member 14c to the inner circumferential face 12y of the shell cup 12. Each of the radial lip 14a and the side lip 14b butts against a shoulder portion 1y of the shaft portion 1a of the cross shaft, so that the grease in the shell cup 12 is prevented from leaking out, and external water, dust, and the like are prevented from entering. In addition, on the outer side of the sealing member 14 , a dust shield 16 for preventing muddy water from entering may be sometimes disposed in sliding contact with the outer circumferential face 12x of the shell cup 12.

In the above-described structure, the universal joint can increase an outer diameter of the shaft portion of the cross shaft, increase the number of rollers, and increase the diameter of each roller without changing the outer diameter size of the bearing cup, as compared with the universal joint using the thick machined-type bearing cup 12 such as shown in Fig. 6. Accordingly, the torque capacity can be improved while maintaining the size of the whole universal joint.

In the universal joint having the above-described configuration, however, the wall thickness of the cylindrical portion 12a of the shell cup 12 is thin. When the shell cup 12 is fitted into the fitting hole 10x of the yoke 10, therefore, the holding force of the shell cup 12 against the sealing member 14 is lowered. Thus, due to the increase in the internal pressure in attaching the shell cup 12 or the knocking-up by the rollers 13 in operation, there arises a problem in that the sealing member 14 may be dropped out of the shell cup 12.

As means for preventing the dropping-out of the sealing member 14 disposed in the vicinity of the opening of the shell cup 12, as shown in the portion Q of Fig. 5, a method may be sometimes employed in which an end portion of the shell cup cylindrical portion 12a is be caulked to fix the sealing member 14.

As other means for preventing the dropping-out of the sealing member 14, the applicants of the invention propose in Japanese Patent Publication (Kokai) No.2002-98163 a method in which the outer circumferential face of the core of the sealing member is formed as an inclined face in which the thickness gradually decreases toward the tip end, and a wedge member is press-inserted into a space having a substantially triangular section between the inclined face of the core and the inner circumferential face of the opening end portion of the bearing cup, thereby fixing the sealing member,. Japanese Patent Publication (Kokai) No.2002-106594 proposes a method in which the outer circumferential face of the opening end portion of the bearing cup is formed as an inclined face in which the thickness gradually decreases toward the opening end, and the interference between the core of the sealing member and a portion which is in contact with the core is prevented from increasing, thereby suppressing the deformation of the sealing member to prevent the dropping-out thereof from occurring.

### Disclosure of the Invention

### Problems to be solved by the Invention

However, there is a problem in that the above-described conventional means for preventing the dropping-out of the sealing member causes the working or assembling of the members to be complicated, and the cost of the universal joint to be increased.

In the above-described universal joint, the inner circumference of the fitting hole of the yoke is caulked, and the shell cup is installed by means of the caulked portion K. When some trouble occurs in the bearing portion, therefore, it is necessary to exchange the whole universal joint or an entire apparatus such as a propeller shaft in which the universal joint is incorporated. Thus, there are problems in that the repair takes a lot of trouble, and that the cost burden is increased.

The invention has been conducted in order to solve the above-described problems. It is a first object of the invention to provide a light and small universal joint with a long lifetime in which the dropping-out of a sealing member can be prevented from occurring without causing any increase of the cost.

It is a second object of the invention to provide a universal joint in which the maintenance of a bearing portion and the exchange of components can be easily performed, whereby the running cost can be reduced.

### Means for Solving the Problems

In order to attain the above-mentioned objects, the invention set forth in claim 1 is a universal joint in which each of shaft portions of a cross shaft is rotatably supported by: a shell-like bearing cup which is formed by pressing a plate, and which is fitted into a hole disposed in a fork end portion of a yoke; and a plurality of needle rollers arranged on an inner circumference of the bearing cup, characterized in that an annular sealing member a lip portion of which is in slide contact with an inner circumferential face of the bearing cup is disposed on an outer circumference of the shaft portion of the cross shaft.

Namely, according to the invention of claim 1, the sealing member, which is disposed in the vicinity of the opening end of the inner circumference of the shell cup in the conventional universal joint, is disposed on the outer circumference of the shaft portion of the cross shaft, so that the sealing member is fixed in a predetermined position without being affected by the press insertion of the shell cup into the yoke. In the universal joint of the invention, therefore, the holding force on the sealing member is not reduced by the press insertion of the shell cup into the yoke, and the dropping-out of the sealing member due to the increase in the internal pressure in attaching the shell cup or the knocking-up by the rollers in operation can be prevented from occurring.

According to the method of fixing the sealing member, the contact pressure of the lip portion of the sealing member in contact with the inner circumferential face of the shell cup is stabilized without being affected by the positional deviation of the sealing member in the axial direction, the variation in the gap between the cross shaft and the shell cup in the axial direction, or the like. Accordingly, the universal joint of the invention can effectively prevent the leak of grease or the like over a long term from occurring, and the lifetime thereof can be improved.

In addition, as compared with conventional methods such as in which the inner circumference of the shell cup is caulked, in which the outer circumferential face of the opening end portion of the shell cup is formed as an inclined face, and in which the outer circumferential face of the core of the sealing member is formed as an inclined face, and the sealing member is fixed by press inserting another wedge member, the method of fixing the sealing member can suppress the increase of the production cost to the minimum.

Next, the invention set forth in claim 2 is characterized in that the lip portion of the sealing member is formed in an inclined shape toward an opening end side of the bearing cup from a root portion of the lip portion.

According to the configuration, when the cross shaft is to be covered with the shell cup, the inserting direction of the shell cup coincides with the inclination direction of the lip. In the universal joint of this invention. Consequently, there is no fear that the respective lips of the sealing member are reversed, even in the process of performing the covering by the shell cup. Therefore, the sealing effect against the grease or the like can be surely attained.

The invention set forth in claim 3 is characterized in that the sealing member is fitted to the shaft portion via a metal annular member.

According to the configuration, in the universal joint of the invention, the sealing member can be more accurately positioned with respect to the shaft portion of the cross shaft.

Next, the invention set forth in claim 4 is a universal joint in which each of shaft portions of a cross shaft is rotatably supported by: a bearing cup which is formed into a bottomed cylindrical shape by pressing a plate, and which is fitted into a fitting hole disposed in a fork end portion of a yoke; and a plurality of needle rollers arranged on an inner circumference of the bearing cup, characterized in that a circumferential groove is formed in an inner circumference of the fitting hole of the yoke, and a retaining ring for preventing the bearing cup from dropping out in an axial direction of the bearing cup is disposed in the circumferential groove.

In the invention, in the universal joint using the shell-like bearing cup, instead of the conventional prevention of dropping-out of the bearing cup by the caulking method, the bearing cup is locked by the retaining ring disposed on the inner circumference of the fitting hole, thereby attaining the desired objects.

Specifically, according to the invention set forth in claim 4, since the retaining ring is adopted, the positioning of the shell cup in the axial direction can be easily performed, as compared with the conventional method by the caulking method. In addition, the retaining ring can be easily attached and detached, so that it is possible to perform the maintenance of a bearing portion of the universal joint, and the like.

In addition, if a trouble happens, the exchange of components in the bearing portion of the universal joint can be smoothly performed. Thus, as compared with the conventional universal joint in which it is necessary to exchange the whole of the universal joint or the apparatus such as a propeller shaft in which the universal joint is incorporated, it is possible to reduce the trouble and cost for the repair. Accordingly, the universal joint of the invention can be produced as a universal joint which is low in running cost and economically superior.

The invention set forth in claim 5 is characterized in that, in view of the locking force which is exerted by the retaining ring disposed in the fitting hole on the bearing cup, the shape of the bearing cup is formed so that a chamfered size in a radial direction of an outer bottom portion of the cup is 4% or less with respect to an outer diameter of the cup.

In the case where a retaining ring is disposed by providing a circumferential groove in the inner circumferential face of a hole, usually, a method complying with JIS B 2804 (C-type retaining ring) is used in accordance with the diameter of the hole. That is, in the case where a circumferential groove having a depth complying with the JIS is formed and a retaining ring having a shape complying with the JIS is used for the circumferential groove, the chamfered size of the bearing cup in the radial direction caused by the folding by the press is set to 4% or less with respect to the diameter of the outer circumference of the cup. As a result, the inner circumference of the retaining ring reaches a flat portion of a bottom portion of the bearing cup, so that it is possible to ensure a sufficient "engaging margin" for the bearing cup. Accordingly, in the universal joint of the invention, both the easy attachment and detachment of the bearing cup in maintenance, and the sure prevention of the bearing cup from being dropped out in operation can be attained.

### Brief Description of the Drawings

[Fig. 1] Fig. 1 is a partial section view showing the structure of a universal joint of an embodiment of the invention.
[Fig. 2] Fig. 2 is a section view showing the structure of a bearing portion in the universal joint of the embodiment of the invention.
[Fig. 3] Fig. 3 is an enlarged view of a portion P in Fig. 2.
[Fig. 4] Fig. 4 is a partial section view showing the structure of a conventional universal joint using a shell-type bearing cup.
[Fig. 5] Fig. 5 is a section view showing the structure of a bearing portion of the conventional universal joint using the shell-type bearing cup.
[Fig. 6] Fig. 6 is a partial section view showing the structure of a conventional universal joint using a bearing cup of machined type.

### Legend of the Reference Numerals.

1 cross shaft
1a shaft portion 1b circumferential stepped portion 1x outer circumferential face of shaft portion 1y shoulder portion
2 bearing cup (shell cup)
2a cylindrical portion 2b bottom portion 2x outer circumferential face 2y inner circumferential face
3 roller
4 sealing member
4a radial lip 4b side lip 4c base member
5 metal annular member
6 dust shield
7 retaining ring
10 yoke
10a fork end portion 10b outer end portion 10x fitting hole 10y circumferential groove
12 bearing cup (shell cup)
13 roller
14 sealing member
15 core
16 dust shield
22 bearing cup
23 roller
24 sealing member
25 core
26 dust shield
Best Mode for Carrying Out the Invention

Hereinafter, an embodiment of the invention will be described with reference to the drawings.

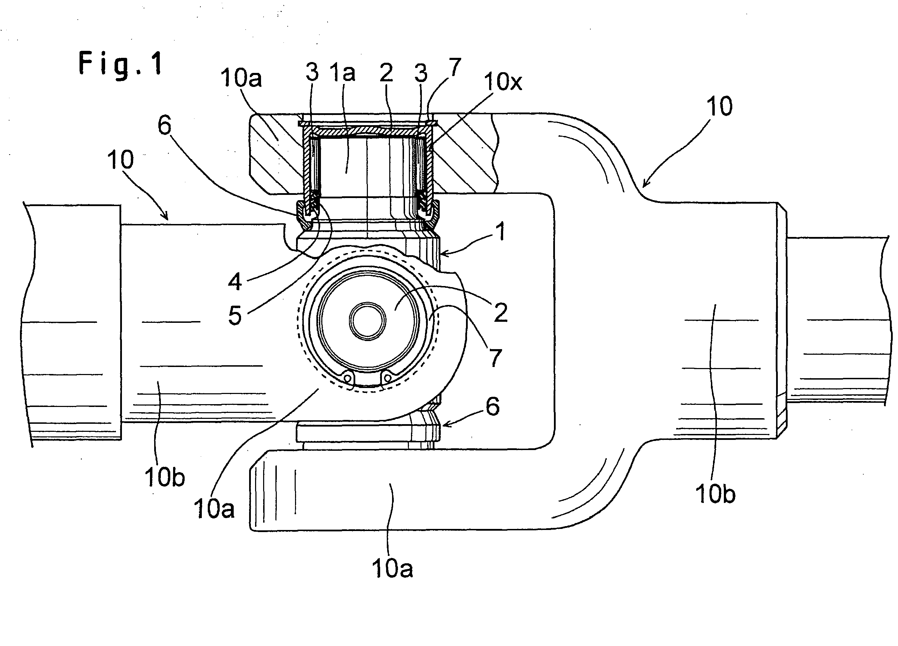

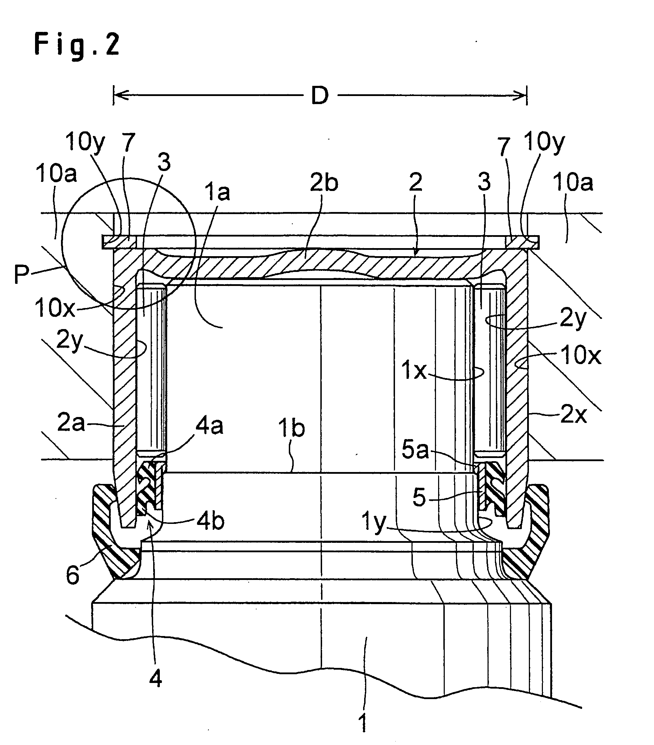

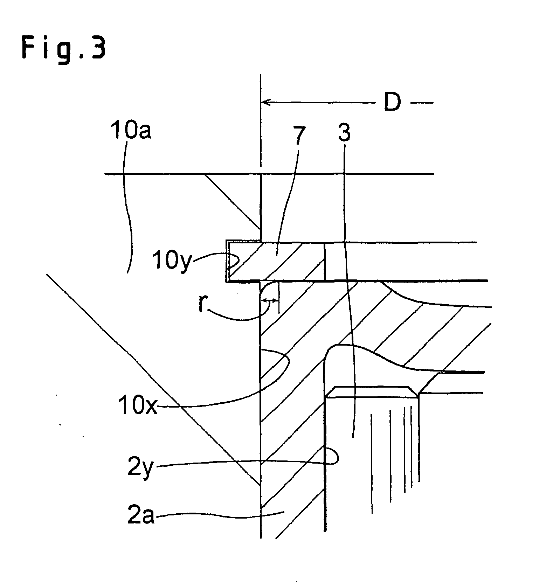

Fig. 1 is a partial section view showing the structure of a universal joint of an embodiment of the invention, Fig. 2 is a section view showing the structure of a bearing portion in the universal joint, and Fig. 3 is an enlarged view of a portion P in Fig. 2.

The fundamental structure of the universal joint is identical with that of the conventional art example. A pair of yokes 10, 10 each having a fork shape are mutually coupled by a cross shaft 1 from which respective shaft portions 1a protrude in four directions. In each of fork end portions 10a, 10a of the yoke 10, a fitting hole 10x for supporting each shaft portion 1a of the cross shaft 1 is disposed. The cross shaft 1 and the yoke 10 are coupled together by interposing a radial bearing in which a plurality of needle rollers 3, 3, ... are arranged between inner and outer rings, the shaft portion 1a of the cross shaft 1 serving as the inner ring, a metal bearing cup (shell cup) 2 serving as the outer ring.

The metal shell cup 2 is a bottomed cylinder configured by a cylindrical portion 2a and a bottom portion 2b, in the same manner as the prior art, and formed by pressing a plate. The shell cup 2 is fixed to the fork end portion 10a of the yoke 10 by pressingly inserting an outer circumferential face 2x of the cylindrical portion 2a into the fitting hole 10x. In an annular space formed by an inner circumferential face 2y of the shell cup 2 and an outer circumferential face 1x of the shaft portion 1a, the plurality of needle rollers 3 are arranged, and the space is filled with a lubricant (not shown) such as a grease for maintaining the lubrication of these needle rollers 3. In a shoulder portion 1y of the shaft portion 1a of the cross shaft, a dust shield 6 made of a resin for preventing muddy water or the like from entering is disposed in slide contact with the outer circumferential face 2x of the shell cup 2. The material of the dust shield 6 is not particularly limited.

A first feature of the universal joint of the embodiment resides in that an annular sealing member 4 for hermetically sealing the opening of the shell cup 2 is fitted to the outer circumferential face 1x of the shaft portion of the cross shaft 1 via a metal annular member 5.

The sealing member 4 is formed by an elastic material such as rubber. Its lip portions (a radial lip 4a and a side lip 4b) are formed in a shape inclined toward the opening of the shell cup 2 from an annular base member 4c. These lips 4a and 4b are formed in such a manner that the tip ends thereof are in slide contact with the inner circumferential face 2y of the shell cup 2.

According to the configuration, the sealing member 4 is not affected by the press insertion of the shell cup 2 into the fitting hole 10x of the yoke 10, and the dropping-out of the sealing member 4 due to the increase of the internal pressure in incorporating of the shell cup 2 or the knocking-up by the rollers 3 in operation does not occur.

In the metal annular member 5, a folded portion 5a which is to be engaged with a circumferential stepped portion 1b disposed in the shaft portion 1a of the cross shaft 1 is formed. Thus, the sealing member 4 is fitted and fixed to the shaft portion outer circumferential face 1x of the cross shaft 1 having a high dimension accuracy, via the metal annular member 5, so that the positioning in the axial direction can be easily performed. In addition, the deviation in position hardly occurs even when the shell cup 2 is press-inserted into the yoke 10, and the contact pressures of the tip ends of the lips 4a, 4b against the inner circumferential face 2y of the shell cup are stabilized.

Moreover, since the lip portions of the sealing member 4 are inclined toward the opening of the shell cup 2, there is no fear that the lips 4a, 4b of the sealing member 4 are reversed, even when the cross shaft 1 is covered with the shell cup 2.

The material and configuration of the sealing member 4 \ in this invention are not limited to those described above, and may be variously modified. For example, the shape and number of the lip portions may be changed in accordance with the environment in which the universal joint is used. Instead of the interposed metal annular member 5, a core or the like may be disposed in the sealing member 4. Alternatively, the metal annular member 5 may be fitted and fixed to the shaft portion 1a of the cross shaft 1 without forming the folding portion 5a.

Next, a second feature of the universal joint of the embodiment of the invention will be described.
The second feature of the universal joint of the embodiment resides in that a circumferential groove 10y is formed in the inner circumferential face of the fitting hole 10x disposed in the fork end portion 10a of the yoke 10, and a retaining ring (C-type retaining ring) 7 is disposed in the circumferential groove 10y. As shown in Fig. 3, the shell cup 2 which is to be fitted in the fitting hole 10x is formed into a shape in which the chamfered size r in the radial direction of the cup bottom portion 2b is 4% or less with respect to the outer diameter D of the cup (r < D x 0.04).

As an example of the retaining ring 7, a method in which a C-type retaining ring is disposed in the fitting hole 10x having a hole diameter of 25 mm by a method complying with JIS B 2804 (C-type retaining ring) will be described.

In this example, on an inner circumference of the fitting hole 10x having a diameter D = 25 mm, a circumferential groove 10y having a diameter of 26.2 mm (a depth from the inner circumferential face of the fitting hole is 0.6 mm) is formed. The C-type retaining ring suitable for the fitting hole 10x having such a diameter is a C-type retaining ring having an outer diameter of 26.9 mm (the maximum inner diameter of 22.7 mm), and fitted into the circumferential groove while the diameter is reduced. Therefore, the width of the inner diameter of the C-type retaining ring protruding from the inner circumferential face of the fitting hole 4x in the radial direction is ensured to 2.4 mm at the minimum.

On the other hand, in the shell cup 2 having the outer diameter D of 25 mm, in the case where the chamfered size r in the radial direction of the shell cup bottom portion 2b is 4% of the outer diameter D, the size r is 1 mm. Accordingly, the remaining portion of 1.4 mm with respect to the protruding width (2.4 mm) of the C-type retaining ring is engaged by a flat portion on the inner circumference side rather than the chamfered portion.

According to the above-described configuration, as compared with the conventional method in which the caulking is used for the prevention of dropping-out of the bearing cup, the positioning of the shell cup 2 in the axial direction can be easily performed in the universal joint of the invention. The retaining ring 7 can be easily attached and detached, so that it is possible to easily perform in a short time the maintenance for the bearing portion of the universal joint, exchange of components, and the like.

Since the chamfered size r in the radial direction of the outer bottom portion of the shell cup 2 is 4% or less with respect to the diameter D of the outer circumference of the cup 2, the inner circumference of the retaining ring 7 reaches the flat portion of the shell cup bottom portion 2b, so that a sufficient "engaging margin" for the shell cup 2 can be ensured.

The shape of the retaining ring 7 used in the invention is not restricted to the example shown in the above-described embodiment. For example, the retaining ring may be a ring having another shape such as an E-type retaining ring. The section shape of the circumferential groove 10y formed in the inner circumference of the fitting hole 10x of the yoke 10 is not limited to the shape in this example. In view of the easiness for fitting the retaining ring 7, various modifications can be made.

### Industrial Applicability

As described above in detail, according to the universal joint of the invention, without introducing the in-crease of cost as compared with the conventional product, it is possible to prevent the sealing member from dropping out due to the increase in the internal pressure in attaching the shell cup or the knocking-up by the rollers in operation. Therefore, it is possible to provide a universal joint in which the leakage of grease or the like is effectively prevented from occurring over a long period of time, and the lifetime is long, while the universal joint is light and compact and has a high load capacity.

In addition, according to the universal joint of the invention, it is possible to easily perform the maintenance for the bearing portion, exchange of components, and the like. As compared with the conventional universal joint in which the whole of the universal joint or a propeller shaft ASSY provided with the universal joint should be exchanged, it is possible to attain the reduction of the running cost, and the increase of lifetime of the whole of an apparatus in which the universal joint is incorporated.

## Claims

1. A universal joint in which each of shaft portions of a cross shaft is rotatably supported by: a bearing cup which is formed into a bottomed cylindrical shape by pressing a plate, and which is fitted into a fitting hole disposed in a fork end portion of a yoke; and a plurality of needle rollers arranged on an inner circumference of said bearing cup, **characterized in that**
an annular sealing member a lip portion of which is in slide contact with an inner circumferential face of said bearing cup is disposed on an outer circumference of said shaft portion of said cross shaft.

2. A universal joint according to claim 1, wherein said lip portion of said sealing member is formed in an inclined shape toward an opening end side of said bearing cup from a root of said lip portion.

3. A universal joint according to claim 1 or 2, wherein said sealing member is fitted to said shaft portion via a metal annular member.

4. A universal joint in which each of shaft portions of a cross shaft is rotatably supported by: a bearing cup which is formed into a bottomed cylindrical shape by pressing a plate, and which is fitted into a fitting hole disposed in a fork end portion of a yoke; and a plurality of needle rollers arranged on an inner circumference of said bearing cup, **characterized in that**
a circumferential groove is formed in an inner circumference of said fitting hole of said yoke, and a retaining ring for preventing said bearing cup from dropping out in an axial direction of said bearing cup is disposed in said circumferential groove.

5. A universal joint according to claim 4, wherein said bearing cup is formed so that a chamfered size in a radial direction of an outer bottom portion of said cup is 4% or less with respect to an outer diameter of said cup.
